# EUROPÄISCHE PATENTSCHRIFT

(11) **EP 4 166 214 B1**
(45) Veröffentlichungstag und Bekanntmachung des Hinweises auf die Patenterteilung: **26.02.2025**
(21) Anmeldenummer: 21202643.9
(22) Anmeldetag: 14.10.2021
(51) Int. Cl.: B01D 46/00, B01D 46/10

(54) **FILTERANORDNUNG MIT CODIERELEMENT**
FILTER ELEMENT AND FILTER ASSEMBLY WITH CODING ELEMENT
ÉLÉMENT FILTRE ET AGENCEMENT DE FILTRE POURVU D'ÉLÉMENT DE CODAGE

(43) Veröffentlichungstag der Anmeldung: 19.04.2023
(73) Patentinhaber: Carl Freudenberg KG, 69469 Weinheim (DE)
(72) Erfinder: Sieh, Maik, 69207 Sandhausen (DE); Bastan, Güngör, 63303 Dreieich (DE); Schumacher, Sascha, 69483 Wald-Michelbach (DE)

(56) Entgegenhaltungen:
- EP-A1- 2 774 667
- WO-A1-2019/110786
- DE-A1- 102014 009 887
- US-A1- 2020 261 837

## Beschreibung

Die Erfindung betrifft eine Filteranordnung mit einem Filterelement und mit einem Filtergehäuse zur Aufnahme des Filterelements. Das Filterelement ist mit einem Filterrahmen, einem in dem Filterrahmen aufgenommenen Faltenbalg aus Filtermedium und einer außen am Filterrahmen umlaufenden Dichtung ausgebildet.

### Stand der Technik

Aus der DE 10 2005 048 841 A1 ist ein Filterelement bekannt, welches in ein Gehäuse einer Belüftungsanlage eines Kraftfahrzeugs eingesetzt wird. Konkret korrespondieren bei dieser Filteranordnung Führungszapfen des Gehäuses mit Führungsschächten im Filterelement. Hierdurch soll eine mechanische Codierung realisiert werden, die sicherstellt, dass in das Gehäuse nur ein für dieses Gehäuse geeignetes Filterelement eingesetzt wird. Nachteilig ist, dass die Filterfläche durch die Führungszapfen beeinträchtig wird und die Filtrationsleistung reduziert werden kann.

Die DE 10 2009 059 782 84 B4 zeigt ein Filterelement zum Einsetzen in ein Gehäuse einer Belüftungs- oder Klimaanlage, umfassend einen Faltenbalg und mindestens eine Codierseite, welche einer Wand des Gehäuses zuwendbar ist, wobei der Codierseite ein Profil zugeordnet ist. Das Filterelement kann mit seiner schmalen Seite mit dem Profil voraus in das Gehäuse eingeschoben werden und wird daher auch als "Frontloader" bezeichnet. Für einen sogenannten "Toploader", bei welchem das Filterelement in Durchströmungsrichtung eingesetzt wird, funktioniert die beschriebene Codierung nicht.

Die DE 10 2014 009 887 A1 zeigt einen Filter mit einem Filterelement und einem Filtergehäuse. Die umlaufende Dichtung am Filterelement ist mit zwei Ausbuchtungen versehen. In diese beiden Ausbuchtungen greifen bei der Montage des Filters in am Filtergehäuse vorgesehenen Erhebungen ein, wodurch eine gute Positionierung des Filterelements im Filtergehäuse ermöglicht wird.

### Aufgabenstellung

Der Erfindung liegt die Aufgabe zugrunde, eine mechanische Codierung für ein Filterelement anzugeben, welche eine eindeutige Zuordnung eines Filterelements zu einem Filtergehäuse sicherstellt und dabei die wirksame Filterfläche nicht beeinträchtigt.

### Technische Lösung

Gelöst wird diese Aufgabe durch eine Filteranordnung wie sie nachfolgend beschrieben und beansprucht sind.

Erfindungsgemäß wurde als vorteilhaft erkannt Codierelemente in die Dichtung des Filterelements bzw. in das Filtergehäuse zu integrieren.

Die Erfindung betrifft eine Filteranordnung mit einem Filterelement wie nachfolgend beschrieben und mit einem Filtergehäuse zur lösbaren Aufnahme und Halterung des Filterelements. Erfindungsgemäß ist mindestens ein gehäuseseitiges mechanisches Codierelement in das Filtergehäuse integriert. Das mechanische Codierelement weist eine spezifische Geometrie auf und ist räumlich-körperlich ausgestaltet. Das filterseitige Codierelement und das gehäuseseitige Codierelement sind komplementär zueinander ausgeformt und bilden so zusammen eine Codiervorrichtung. Sind mehrere gehäuseseitige Codierelemente vorgesehen, so kann die gleiche Anzahl an filterseitigen Codierelementen vorgesehen sein.

Das Filterelement dient zur Luftfiltration für eine Fahrzeugkabine mit einem Filterrahmen, einem in dem Filterrahmen aufgenommenen Faltenbalg aus einem Filtermedium, z.B. Vliesstoff, und einer außen am Filterrahmen umlaufenden Dichtung zur Abdichtung gegenüber einem Filtergehäuse, in welchem das Filterelement aufgenommen werden kann. Der Filterrahmen kann in einer möglichen Ausgestaltung durch sogenannte Kantenbänder gebildet werden.

Es ist mindestens ein filterseitiges mechanisches Codierelement in die Dichtung integriert. Das mechanische Codierelement weist eine spezifische Geometrie auf und ist räumlich-körperlich ausgestaltet. Es handelt sich bei der mechanischen Codierung also nicht um eine chemische, magnetische oder elektronische Codierung. Das filterseitige Codierelement kann mit einem gehäuseseitigen Codierelement als Gegenelement zusammenwirken und mit diesem zusammen eine Codiervorrichtung ausbilden. Sind mehrere filterseitige Codierelemente vorgesehen, so kann die gleiche Anzahl an gehäuseseitigen Codierelementen vorgesehen sein.

Die Funktion des Codierelements und der Codiervorrichtung ist eine Codierung im Sinne einer Fälschungssicherung. Nur Filterelemente mit Original-Codierelement können in das Filtergehäuse eingesetzt werden. Des Weiteren kann das Codierelement auch als Positionierhilfe dienen und ein korrektes Einsetzen des Filterelements in das Filtergehäuse sicherstellen, d.h. dass das Filterelement bei seiner Montage in die richtige Position in dem Filtergehäuse verbracht wird.

Durch die erfindungsgemäße Anordnung des filterseitigen Codierelements integriert in die Dichtung wird in vorteilhafter Weise gewährleistet, dass keine Beeinträchtigung und keine Reduzierung der wirksamen Filterfläche des Faltenbalgs erfolgt.

Erfindungsgemäß ist das filterseitige Codierelement als Vertiefung in der Dichtung ausgeführt, insbesondere als Nut, Kerbe oder Rinne. Eine solche Vertiefung lässt sich fertigungstechnisch einfach realisieren und kann nur schwerlich durch einen Produktpiraten nachträglich an der Dichtung erzeugt werden, ohne die Dichtung zu beschädigen und so eine Leckage zu riskieren.

Erfindungsgemäß besitzt die Dichtung im Bereich des filterseitigen Codierelements eine reduzierte Höhe im Vergleich zur Höhe der Dichtung in Bereichen, in welchen sich kein Codierelement befindet. Die reduzierte Höhe kann insbesondere 20-80% der regulären Höhe betragen. Höhe der Dichtung meint dabei die Dicke der Dichtung in Einschubrichtung betrachtet.

Die Dichtung des Filterelements ist als Radialdichtung zur radialen Abdichtung des Filterelements gegenüber einem aufnehmenden Filtergehäuse ausgeführt. Eine Radialdichtung kann einen guten und dichten Sitz des Filterelements in dem Filtergehäuse bewirken. Dabei weist das Filtergehäuse der Filteranordnung an seiner Innenseite eine Stufe als umlaufenden Absatz auf, welche für die Dichtung eine Auflagefläche ausbildet, nämlich eine axiale Auflagefläche. So wird eine besonders sichere Montage des Filterelements in dem Filtergehäuse ermöglicht.

Die Radialdichtung kann insbesondere eine Kompensationsnut aufweisen. Dazu kann die Kompensationsnut in der rohgasseitigen Oberfläche der Radialdichtung eingebracht sein.

Es wurde als vorteilhaft erkannt, wenn die die Dichtung des Filterelements aus einem Elastomer besteht, insbesondere einem Polyurethan (PU) aus Weichschaum, einem Thermoplastischen Elastomer (TPE) oder einem Ethylen-Propylen-Dien-Kautschuk (EPDM). Dabei werden Elastomere mit Shorehärten 15 -50 Shore A bevorzugt.

Die Dichtung kann in einem separaten Fertigungsprozess hergestellt und mit dem Filterrahmen formschlüssig verbunden werden. Für die formschlüssige Verbindung kann eine insbesondere umlaufende Nut in der Dichtung vorgesehen sein, welche in eine insbesondere umlaufende Feder an dem Filterrahmen eingreift. Die Feder kann dabei ggfs. durch das Kantenband gebildet werden. Dadurch ist bei der Montage des Filterelements eine Art Überstülpen der Dichtung über den Filterrahmen und in ökologisch vorteilhafter Weise eine Widerverwendung der Dichtung für eine neue Einheit aus Filterrahmen und Faltenbalg möglich.

Die Dichtung kann alternativ in einem Fertigungsschritt erzeugt und dabei mit dem Filterrahmen stoffschlüssig verbunden werden. Dazu kann die Dichtung in fertigungstechnisch vorteilhafter Weise an den Filterrahmen angeschäumt oder angegossen werden.

Der Faltenbalg könnte mehrere Lagen, darunter eine mit Aktivkohle aufweisen. Hierdurch ist das Filterelement als Kombifilter einsetzbar, welches neben Staubpartikeln auch unangenehme Gerüche oder Gase adsorbieren kann.

Ein Filterelement der hier beschriebenen Art könnte in ein Gehäuse einer Klimaanlage eingebaut sein.

In einer besonders vorteilhaften und daher bevorzugten Weiterbildung der erfindungsgemäßen Filteranordnung ist das gehäuseseitige Codierelement als Erhebung ausgeführt ist, insbesondere als Feder, Nase oder Rippe, welche gegenüber der innenliegenden Oberfläche des Filtergehäuses erhaben ist. Die innenliegende Oberfläche des Filtergehäuses ist der außenseitig umlaufenden Dichtung des Filterelement zugewandt, wenn dieses in dem Filtergehäuse montiert ist.

Eine solche Erhebung lässt sich fertigungstechnisch einfach realisieren. Ist das filterseitige Codierelement als Vertiefung ausgeführt, so kann die gehäuseseitige Erhebung in der Vertiefung in der Dichtung aufgenommen werden.

In möglicher Ausgestaltung der Filteranordnung erstreckt sich die Erhebung nur über einen Teil der Höhe des Filtergehäuses. So wird eine besonders gute Abdichtung der Dichtung mit dem Filtergehäuse erreicht. Höhe des Filtergehäuses meint dabei die Erstreckung des Filtergehäuses in Einschubrichtung.

In einer fertigungstechnisch besonders günstigen und geschickten Filteranordnung ist die Erhebung einteilig und materialeinheitlich mit dem Filtergehäuse und z.B. in einem Spritzgussprozess aus Kunststoff gefertigt.

In einer vorteilhaften Ausgestaltung der Filteranordnung liegt der Faltenbalg in einer Filterebene und die Einschubrichtung bei Montage des Filterelements in das Filtergehäuse ist senkrecht zu der Filterebene orientiert. Eine solche Filteranordnung wird auch als Toploader bezeichnet (im Gegensatz zu sog. Frontloadern). Bei einer solchen Filteranordnung wurde es als vorteilhaft erkannt, wenn sich die Codierelemente in Einschubrichtung und damit senkrecht zur Filterebene erstrecken. In einer möglichen Ausführung können sich als Codierelemente eine Erhebung und eine Vertiefung in Einschubrichtung erstrecken und bei der Montage ineinander eingreifen.

Die Erfindung betrifft auch die Verwendung einer wie obenstehend beschriebenen Filteranordnung als Innenraumluftfilter zur Filtration und Reinigung der Kabinenluft in einem Fahrzeug, welches einer erhöhten Schadstoffbelastung unterliegt, insbesondere in einem Nutzfahrzeug, einem Schwerlastfahrzeug oder einem Offroadfahrzeug. Bei den Fahrzeugen kann es sich beispielsweise handeln um Lastkraftwagen, Baumaschinen, Landmaschinen oder Forstfahrzeuge.

Die Verwendung des Filterelements in der Fahrzeugkabine eines Fahrzeugs kann zur Filtration von Sekundärluft oder Frischluft eingesetzt werden. Unter Sekundärluft wird Luft verstanden, welche der Fahrzeugkabine erst entnommen und dann gefiltert wieder zugeführt wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein Filterelement in einer perspektivischen Ansicht
- Fig. 2: ein Filtergehäuse für das Filterelement aus Fig. 1 in einer perspektivischen Ansicht
- Fig. 3: eine Filteranordnung mit dem Filterelement aus Fig. 1 und dem Filtergehäuse aus Fig. 2 in einer perspektivischen Ansicht

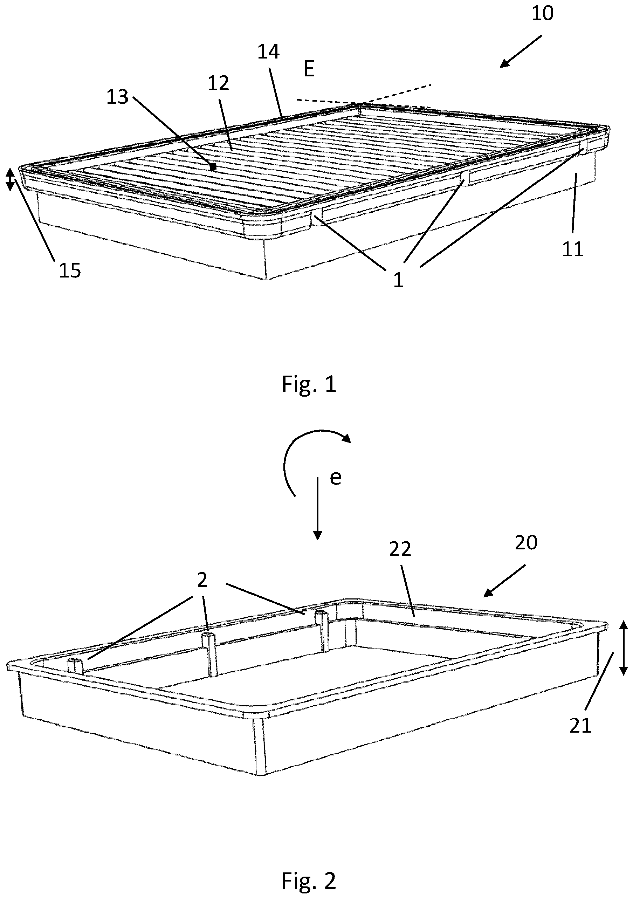

Fig. 1 zeigt ein Filterelement 10 in einer perspektivischen Ansicht. Das Filterelement 10 besitzt einem Filterrahmen 11 und einen in dem Filterrahmen 11 aufgenommenen Faltenbalg 12 aus plissiertem Filtermedium 13. Der Faltenbalg 12 liegt dabei in eine Filterebene E. Außen am Filterrahmen 11 ist umlaufendend eine Dichtung 14 angebracht, welche als Radialdichtung ausgeführt ist.

In die Dichtung 14 sind drei filterseitige mechanische Codierelemente 1 integriert, welche als Vertiefung ausgeführt sind, jeweils in Form einer Kerbe.

Die Dichtung 14 weist - wie durch den Doppelpfeil 15 angedeutet - eine reguläre Höhe auf. Im Bereich der drei filterseitigen Codierelemente 1 besitzt sie jedoch eine reduzierte Höhe.

Fig. 2 zeigt ein Filtergehäuse 20 für das Filterelement 10 aus Fig. 1 in einer perspektivischen Ansicht.

In das Filtergehäuse 20 sind drei gehäuseseitige mechanische Codierelemente 2 integriert. Die gehäuseseitigen Codierelemente 2 sind jeweils als Erhebung ausgeführt, nämlich als Nasen. Die filterseitigen Codierelemente 1 und die gehäuseseitigen Codierelemente 2 sind also komplementär zueinander ausgeformt, können bei Montage ineinander eingreifen und bilden zusammen eine Codiervorrichtung aus.

Die Nasen 2 sind einteilig und materialeinheitlich mit dem Filtergehäuse 20 und beispielsweise in einem Spritzgussverfahren aus Kunststoff gefertigt.

Die Nasen 2 erstrecken sich nur über einen Teil der Höhe 21 des Filtergehäuses 20, welche durch einen Doppelpfeil angedeutet ist.

An seiner Innenseite weist das Filtergehäuse 20 eine Stufe als umlaufenden Absatz 22 auf. Diese Stufe bildet eine axiale Auflagefläche für die Dichtung 14.

Wird das Filterelement 10 aus Fig. 1 um 180° in der Filterebene E gedreht - wie durch den runden Pfeil angedeutet, so kann es in Einschubrichtung e - ebenfalls durch einen Pfeil angedeutet - in das Filtergehäuse 20 aus Fig. 2 eingesetzt und so montiert werden. Die Nasen 2 greifen dabei in die Kerben 1 ein und die Dichtung 14 kommt zur Auflage auf der Stufe 22. Damit kommt das Filterelement 10 in einer eindeutig definierten Position in dem Filtergehäuse 20 zu sitzen. Andere Filterelemente 10 ohne die filterseitigen Codierelemente 1 können hingegen nicht sicher abdichtend in das Filtergehäuse 20 montiert werden.

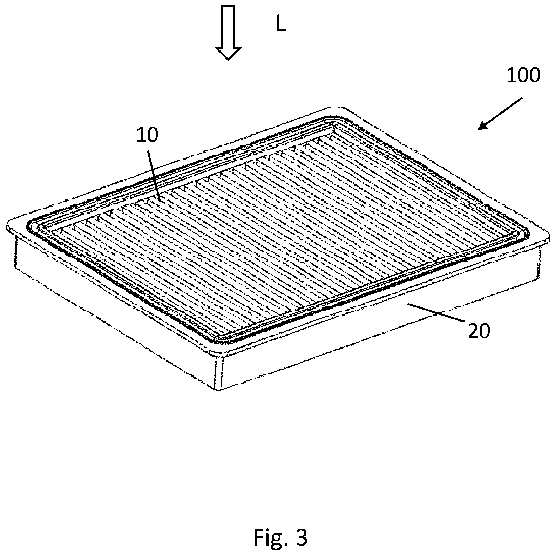

Fig. 3 zeigt eine Filteranordnung 100 mit dem so in das Filtergehäuse 20 montierten Filterelement 10. Die Filteranordnung 100 kann nun in Durchströmungsrichtung L von einem zu reinigenden Luftstrom durchströmt werden.

### Bezugszeichenliste

- 1: filterseitiges Codierelement (Vertiefung)
- 2: gehäuseseitiges Codierelement (Erhebung)

- 10: Filterelement
- 11: Filterrahmen
- 12: Faltenbalg
- 13: Filtermedium
- 14: Dichtung
- 15: Höhe der Dichtung

- 20: Filtergehäuse
- 21: Höhe des Filtergehäuses
- 22: Absatz

- 100: Filteranordnung

- e: Einschubrichtung
- E: Filterebene
- L: Durchströmungsrichtung des Luftstroms

## Patentansprüche

1. Filteranordnung (100) mit einem Filterelement (10) mit einem Filtergehäuse (20) zur Aufnahme des Filterelements (10), umfassend das Filterelement (10) mit einem Filterrahmen (11), einem in dem Filterrahmen (11) aufgenommenen Faltenbalg (12) aus Filtermedium (13) und einer außen am Filterrahmen (11) umlaufenden Dichtung (14), wobei mindestens ein filterseitiges mechanisches Codierelement (1) in die Dichtung (14) integriert ist und
das filterseitige Codierelement (1) als Vertiefung in der Dichtung ausgeführt ist, insbesondere als Nut, Kerbe oder Rinne, wobei
die Dichtung (14) im Bereich des filterseitigen Codierelements (1) eine reduzierte Höhe (15) besitzt, wobei mindestens ein gehäuseseitiges mechanisches Codierelement (2) in das Filtergehäuse (20) integriert ist und das filterseitige Codierelement (1) und das gehäuseseitige Codierelement (2) zusammen eine Codiervorrichtung ausbilden, **dadurch gekennzeichnet, dass** die Dichtung (14) als Radialdichtung ausgeführt ist und
das Filtergehäuse (20) an seiner Innenseite eine Stufe als umlaufenden Absatz (22) aufweist, welche für die Dichtung (14) eine axiale Auflagefläche ausbildet.

2. Filteranordnung nach Anspruch 1, **dadurch gekennzeichnet, dass**
die Radialdichtung (14) eine Kompensationsnut aufweist.

3. Filteranordnung nach einem der vorangehenden Ansprüche, **dadurch gekennzeichnet, dass**
die Dichtung (14) mit dem Filterrahmen (11) formschlüssig verbunden ist, wobei für die formschlüssige Verbindung eine Nut in der Dichtung (14) und eine Feder an dem Filterrahmen (11) vorgesehen sein können, welche ineinandergreifen.

4. Filteranordnung nach einem der vorangehenden Ansprüche, **dadurch gekennzeichnet, dass**
die Dichtung (14) an den Filterrahmen (11) angeschäumt bzw. angegossen ist und damit eine stoffschlüssige Verbindung von Dichtung (14) und Filterrahmen (11) erfolgt.

5. Filteranordnung nach einem der vorangehenden Ansprüche, **dadurch gekennzeichnet, dass**
das gehäuseseitige Codierelement (2) als Erhebung ausgeführt ist, insbesondere als Feder, Nase oder Rippe.

6. Filteranordnung nach Anspruch 5, **dadurch gekennzeichnet, dass** sich die Erhebung (2) nur über einen Teil der Höhe (21) des Filtergehäuses (20) erstreckt.

7. Filteranordnung nach Anspruch 5 oder 6, **dadurch gekennzeichnet, dass** die Erhebung (2) einteilig und materialeinheitlich mit dem Filtergehäuse (20) ist.

8. Filteranordnung nach einem der vorangehenden Ansprüche, **dadurch gekennzeichnet, dass**
der Faltenbalg (12) in einer Filterebene (E) liegt, die Einschubrichtung (e) des Filterelements (10) in das Filtergehäuse (20) senkrecht zu der Filterebene (E) orientiert ist und sich die Codierelemente (1, 2) in Einschubrichtung (e) erstrecken.

9. Verwendung einer Filteranordnung (100) nach einem der vorangehenden Ansprüche in der Fahrzeugkabine eines Fahrzeugs zur Filtration von Sekundärluft oder Frischluft.

## Claims

1. Filter arrangement (100) having a filter element (10) and having a filter housing (20) for accommodating the filter element (10), comprising the filter element (10) with a filter frame (11), with a corrugated bellows (12) composed of filter medium (13) which is accommodated in the filter frame (11), and with a seal (14) which runs around the outside of the filter frame (11), wherein at least one filter-side mechanical coding element (1) is integrated in the seal (14), and
the filter-side coding element (1) is in the form of a depression in the seal, in particular in the form of a groove, notch or channel, wherein the seal (14) has a reduced height (15) in the region of the filter-side coding element (1), wherein at least one housing-side mechanical coding element (2) is integrated in the filter housing (20), and the filter-side coding element (1) and the housing-side coding element (2) together form a coding device, **characterized in that** the seal (14) is in the form of a radial seal, and
the filter housing (20) has on its inner side a step in the form of a peripheral shoulder (22), which forms an axial bearing surface for the seal (14).

2. Filter arrangement according to Claim 1, **characterized in that**
the radial seal (14) has a compensation groove.

3. Filter arrangement according to one of the preceding claims, **characterized in that**
the seal (14) is connected in a form-fitting manner to the filter frame (11), wherein, for the form-fitting connection, provision may be made of a groove in the seal (14) and a tongue on the filter frame (11), which engage one inside the other.

4. Filter arrangement according to one of the preceding claims, **characterized in that**
the seal (14) is foamed or cast onto the filter frame (11), and a cohesively bonded connection of seal (14) and filter frame (11) is thus realized.

5. Filter arrangement according to one of the preceding claims, **characterized in that**
the housing-side coding element (2) is in the form of an elevation, in particular in the form of a tongue, nose or rib.

6. Filter arrangement according to Claim 5, **characterized in that**
the elevation (2) extends only over a part of the height (21) of the filter housing (20).

7. Filter arrangement according to Claim 5 or 6, **characterized in that**
the elevation (2) is in one piece with and of the same material as the filter housing (20).

8. Filter arrangement according to one of the preceding claims, **characterized in that**
the corrugated bellows (12) lies in a filter plane (E), the push-in direction (e) for pushing the filter element (10) into the filter housing (20) is oriented perpendicularly to the filter plane (E), and the coding elements (1, 2) extend in the push-in direction (e).

9. Use of a filter arrangement (100) according to one of the preceding claims in the vehicle cabin of a vehicle for filtration of secondary air or fresh air.

## Revendications

1. Agencement de filtre (100) avec un élément filtrant (10) avec un boîtier de filtre (20) pour recevoir l'élément filtrant (10), comprenant l'élément filtrant (10) avec un cadre de filtre (11), un soufflet (12) en milieu filtrant (13) reçu dans le cadre de filtre (11) et un joint d'étanchéité (14) entourant l'extérieur du cadre de filtre (11), au moins un élément de codage mécanique (1) côté filtre étant intégré dans le joint d'étanchéité (14) et
l'élément de codage (1) côté filtre étant réalisé sous forme de renfoncement dans le joint d'étanchéité, notamment sous forme de rainure, d'encoche ou de goulotte, le joint d'étanchéité (14) possédant une hauteur réduite (15) dans la zone de l'élément de codage (1) côté filtre, au moins un élément de codage mécanique (2) côté boîtier étant intégré dans le boîtier de filtre (20) et l'élément de codage (1) côté filtre et l'élément de codage (2) côté boîtier formant ensemble un dispositif de codage, **caractérisé en ce que** le joint d'étanchéité (14) est réalisé sous forme de joint d'étanchéité radial, et
le boîtier de filtre (20) présente sur son côté intérieur un gradin en tant qu'épaulement périphérique (22), qui forme une surface d'appui axiale pour le joint d'étanchéité (14).

2. Agencement de filtre selon la revendication 1, **caractérisé en ce que** le joint d'étanchéité radial (14) présente une rainure de compensation.

3. Agencement de filtre selon l'une quelconque des revendications précédentes, **caractérisé en ce que** le joint d'étanchéité (14) est relié par complémentarité de forme au cadre de filtre (11), une rainure dans le joint d'étanchéité (14) et une languette sur le cadre de filtre (11) pouvant être prévues pour la liaison par complémentarité de forme, lesquelles s'engagent l'une dans l'autre.

4. Agencement de filtre selon l'une quelconque des revendications précédentes, **caractérisé en ce que** le joint d'étanchéité (14) est moussé ou moulé sur le cadre de filtre (11) et il en résulte une liaison par matière entre le joint d'étanchéité (14) et le cadre de filtre (11) .

5. Agencement de filtre selon l'une quelconque des revendications précédentes, **caractérisé en ce que** l'élément de codage (2) côté boîtier est réalisé sous forme de relief, notamment sous forme de languette, d'ergot ou de nervure.

6. Agencement de filtre selon la revendication 5, **caractérisé en ce que** le relief (2) ne s'étend que sur une partie de la hauteur (21) du boîtier de filtre (20).

7. Agencement de filtre selon la revendication 5 ou 6, **caractérisé en ce que** le relief (2) est d'une seule pièce et d'un seul matériau avec le boîtier de filtre (20).

8. Agencement de filtre selon l'une quelconque des revendications précédentes, **caractérisé en ce que** le soufflet (12) est situé dans un plan de filtration (E), la direction d'insertion (e) de l'élément filtrant (10) dans le boîtier de filtre (20) est orientée perpendiculairement au plan de filtration (E) et les éléments de codage (1, 2) s'étendent dans la direction d'insertion (e).

9. Utilisation d'un agencement de filtre (100) selon l'une quelconque des revendications précédentes dans l'habitacle d'un véhicule pour filtrer l'air secondaire ou l'air frais.
